Europäisches Patentamt

European Patent Office

Office européen des brevets

(19)

(11) Publication number: **0 183 905**
**A2**

(12) # EUROPEAN PATENT APPLICATION

(21) Application number: **85107644.8**

(22) Date of filing: **20.06.85**

(51) Int. Cl.⁴: **B 29 C 47/28**
**B 29 C 47/06**

(30) Priority: **28.11.84 IT 2377484**

(43) Date of publication of application:
**11.06.86 Bulletin 86/24**

(84) Designated Contracting States:
**AT BE CH DE FR GB LI LU NL SE**

(71) Applicant: **Officina Meccanica G. Prandi & C. S.p.A.**
**Via Sempione**
**I-28040 Marano Ticino (NO)(IT)**

(72) Inventor: **Gini, Claudio**
**Via E. Picchio**
**I-28047 Oleggio (NO)(IT)**

(72) Inventor: **Vanetti, Giuseppe**
**Via Beati 17**
**I-28053 Castelletto Sopra Ticino (NO)(IT)**

(74) Representative: **Incollingo, Italo**
**Piazzale Lavater, 3**
**I-20129 Milano(IT)**

(54) **Head for the circular coextrusion of a plurality of thermoplastic material layers.**

(57) Head for the coextrusion of N thermoplastic materials consisting of N + 1 plates which are substantially modular and are assembled by form coupling constraint, each plate comprising a longitudinal conduit to feed one of said materials; at least an annular semi-collector-distributor; at least a semi-channel; a projection and a specular recess.

The intermediate plates between the first and the last plate show a second semi-collector and a second semi-channel which by coupling with a precedent or successive semi-collector respectively semi-channel form a collector respectively a channel which extend annularly over the whole plate, the distributor section area and the channel length showing gradients over the 360°.

./...

FIG. 1

HEAD FOR THE CIRCULAR CO-EXTRUSION OF A PLURALITY OF THERMOPLASTIC MATERIAL
LAYERS.


BACKGROUND OF THE INVENTION

1. Field of the invention

The present invention relates to a head for the circular extrusion of
concentric layers of thermoplastic materials (different or not),
particularly for the extrusion of tubular multi-layer-films.

2. Description of the Prior Art

It is known that the use of films or sheets consisting of more layers
and prepared by the tubular co-extrusion technique is largely increasing.
It is also known that the heart of the coextrusion plants is just the
head, many types of which are known each showing advantages and drawbacks.
The simplest head type consists conventionally of an inner cylindrical
male body and of outer rings kept together by means of radial screws on
a support body.
Male and rings are concentric and the male outer surface is slightly
separated from the fing inner surface whereby an annular passage or air
gap is thus brought about which imports initial diameters and thiknesses
to the tubular layers of the different materials under extrusion.
The concentric pieces forming said longitudinal passages raise several
problems of design, working, assembly and seal,.
Since the number of feeding channels is equal to the number of thermoplastic
materials to be extruded, each piece requires a specific design, raises
serious constructive problems imposing delicate workings on machine tools
and makes it very difficult to comply with the tolerances admitted for
the different plates and channels. Further difficulties appear during
the head assembly and disassembly f.i. for cleaning the various channels.
When it is desired to increase the number of tube forming layers, it is
necessary to increase the number of concentric channels and thus the
head outer diameter whereby problems of cumber and operation are raised
as the heating resistors are outside and thus a good temperature control
can be obtained on the head outer portion but not on the inner zones.
The control of the different layer thicknesses shall depend on the
tolerances of the various channels located on different circunferences

./.

within the annular body whereby it is necessary to make single regulations with doubtfull results and with further constructive complications. Several solutions have been proposed to eliminate or at least reduce these drawbacks however no definitive success has been reached. Applicant has already adopted satisfactory solutions with sure commercial interest (even if with some limitations); further Applicant has brought about very advantageous dies for extrusion heads (Italian patent Applications n° 23260 A/8 and n° 23440 B/82).

SUMMARY OF THE INVENTION

By continuing research and study in this important field Applicant is now succeeded in realizing a co-extrusion head which substantially avoids the Prior Art drawbacks and allows, as a first object, a very simple design, rheology and machine tool working as well as an optimal distribution of the single layers without needing further controls and, as a second object, a structure of head forming elements which are substantially repetitive and modular and allow a very easy assembly and disassembly and remarkable cost reductions.

These and other objects are achieved with the head according to the invention for the co-extrusion of N thermoplastic resins in the form of N superposed tubes, said head consisting of a male inner body whose cylindrical surface is at a short distance from a concentric inner cylindrical surface with which it creates the narrow annular space or air gap where the primary composite tube is formed, characterized in that said inner air gap forming surface is made of a plurality of N+1 plates which are modular and fit with their form; and that each plate shows a longitudinal conduit for feeding one of the N thermoplastic resins to be extruded, at least a semi-collector acting as distributor of the resin coming from said conduit, at least a semi-channel which extends readially from said collector to the inner generatrix formed by the cylindrical plate assembly, a projection and a recess.

According to a feature of the invention, the plates included between the first and the last plate i.e. plates from 2 to N, have a second semi-collector distributor and a second radial semi-channel, one of the two semi-collectors and semi-channels being on the upper transversal face and the other one being on the lower transveral face of each intermediate plate.

3.                                                   0183905

In a preferred embodiment, the semi-distributor respectively the semi-channel
on one plate, f.i. the lower face of a plate forms with the semi-collector
respectively the semi-channel on the other face f.i. the upper face of the
successive plate a collector respectively a channel, each of which extends
on the whole inner circunference of the plate, the initial crossection area
of the distributor at the bottom of the feeding conduct as well as the width
and the radial extension of the channel starting from said initial collector
crosssection varying along the whole circumference, so as to have on a plate
pressure gradients of the material under extrusion sustantially equal along
the locuses of the centers of all transversal sections of the distributor
and of the channel terminals facing the male body.
Accordingly the same material pressures inside the air gap defined by the
plate inner generatrix and the male outer generatix are achieved by imparting,
on each plate, a first eccentricity to the two circumferences which delimit
the variable transversal areas and a second eccentricity (other than the
first one) to the circumferences which delimit the channel radial extensions
(from the collector to the inner generatrix of the plate).
According to a feature of the invention, these eccentricities on a plate
are different from the off-sets on all the other plates.

BRIEF DESCRIPTION OF THE DRAWINGS

The different features and advantages of the invention shall better appear
from the following description of the preferred (non limitative) embodiment
shown in the attached drawings in which:

- Figure 1 is a schematic, partially cross-sectioned front view of the head
  according to the invention;
- Figure 2 is also a schematic partially cross-sectioned view, (like that
  of fig. 1) of a very limited portion comprising an annular collector-distributor
  and the relevant channel; and
- Figure 3 is a schematic cross-sectional view taken substantially along
  line A-A of Fig. 1.

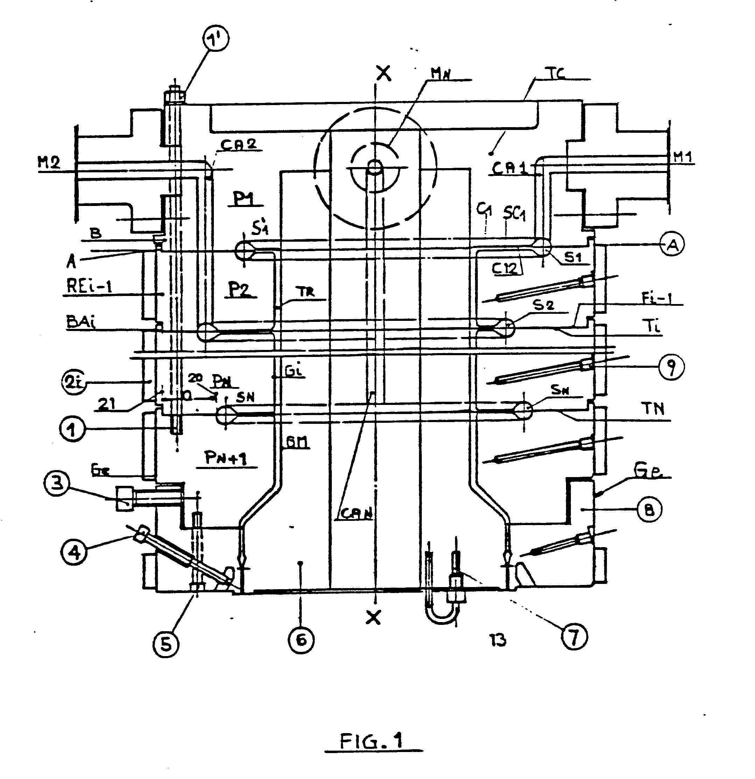

As shown in Fig. 1 the head of coextrusion of N layers or annuli of generally
different but possibly also equal materials comprises N+1 plates $P_1$, $P_2$...Pi..
..$P_N$,$P_{N+1}$.

In the following reference "i" is associated to a generic repetitive component
of the system.

To each $P_i$ are associated: a heating resistance $2_i$, a thermocouple 9 and a feeding conduit $CA_i$ of the material $M_i$ to be extruded. Each conduit $CA_i$ extends parallel to the longitudinal axis X-X of male body 6 and ends in an annular collector-distributor $S_i$ which acts as pipe fitting with a radial channel $C_i$ extending from the collector $S_i$ to the passage or air gap TR between the outer surface GM of male body 6 and the numerous inner surfaces $C_i$ of the superposed plates.

Characteristically each channel $C_i$ is formed of two semichannels $SC_{i-1}$-$SC_i$ one on the lower face or bottom $F_{i-1}$ (not shown) of plate $P_{i-1}$ and the other on the upper face or top $T_i$ of the successive plate $P_i$. Therefore all intermediate plates from $P_2$ to $P_N$ have, each, two semi-channels (one on the top, one on the bottom) whereas only two external plates $P_1$ and $P_{N+1}$ have each only one semichannel more precisely the first plate $P_1$ has semichannel $SC_1$ on its bottom and the last plate $P_{N+1}$ has its semichannel $SC_N$ on its top $T_N$. According to an important feature of the invention, the plates, particular the intermediate plates are modular and are assembled by form-fit between them; to this end the top portion of each plate shows at least a projection $B_{Ai}$ which is in register with a recess $RE_{i-1}$ in the preceding plate. Characteristically each couple of superposed plates $P_{i-1}$-$P_i$ shall have a bottom $F_{i-1}$ and a top $T_i$ in contact along zone Q comprised between the radially remote end $20_i$ of a fitting mouth $S_i$ and the inner end 21 of the compenetration of projection $BA_i$ and recess $RE_{i-1}$. Consequently the lower face of each intermediate plate $P_i$ shows, from the outer end $G_e$ to the inner portion TR, a recess $RE_{i-1}$, then a contacting zone Q, a semi-collector $S_i$ and a semi-channel $SC_i$. Specularly the upper face of the plate $P_i$ shows a projection $BA_i$, a zone Q, a semi-distributor and a semi-channel. The upper face of each plate shows a projection $BA_i$, the contacting zone Q a semi-distributor (specular over the one of the lower face) and the simi-channel.

Only the first and last plates have only one shaped face; indeed the first plate $P_1$ shows recess, semi-distributor and semi-channel on the lower face, while the last plate $P_{N+1}$ shows only on the upper face the projection, the semi-collector and the semi-channel.

The modular plates which are assembled by simple superposing are advantageously kept together by fastening means f.i. screws or bolts 1-1'. The coextrusion head ends at ists lowest portion with the die or female body 8 which has preferably the structure according to the Applicant's above mentioned Italian Patent Applications.

To this end the head is provided with a flexible lip regulating screw 3, a blocking screw 5 and of a male thermocouple 7.

Obviously the lower die does not fall within the scope of the present invention and could thus have a structure different from that of the above Italian patent application n° 23440 B/82.

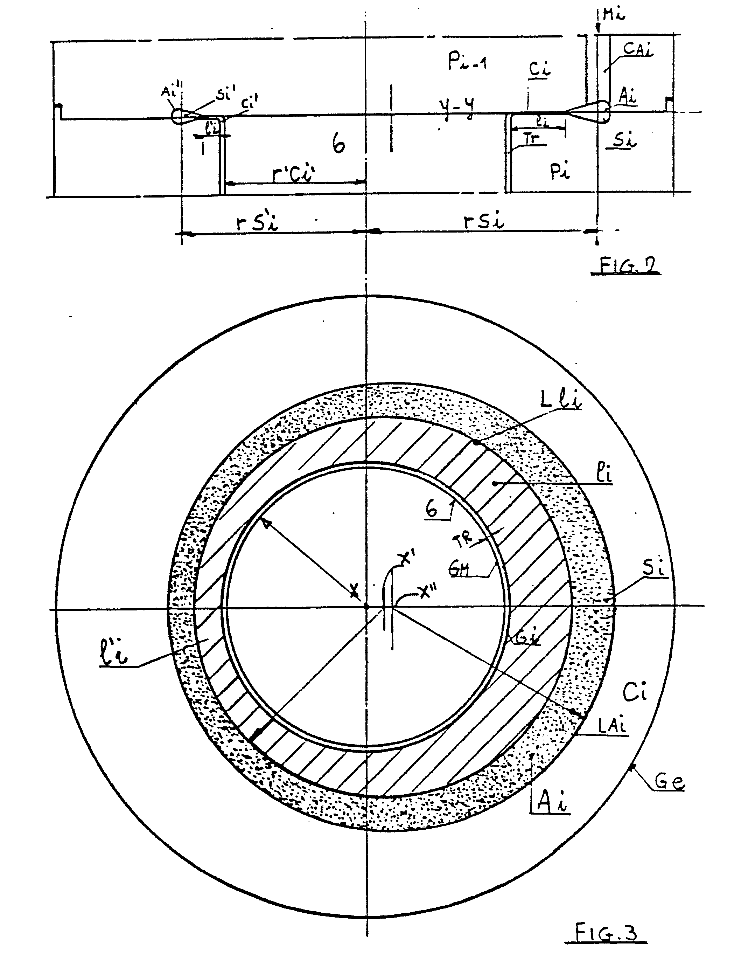

Fig. 2 shows a conduit $CA_i$ which feeds resin $M_i$ and ends at its bottom in the collector-distributor $S_i$ fitting the channel $C_i$ feeding air gap TR. The feeding conduit $CA_i$ is parallel to the male longitudinal axis X-X, channel $C_i$ is radial and collector $S_i$ matching these two orthogonal feeding lines has f.i. a "pear" like section. According to an important feature of the invention, the distributor $S_i$ and the relevant channel $C_i$ extend on the whole circumference of plate $P_i$ however with an off-set. As it may be seen from figures 1-3 (especially from fig. 2) channel $C_i$ and fitting $S_i$ are on a same plane Y-Y orthogonal to axis X-X however they are not symmetrical to X-X. Collector $S_i$ and channel $C_i$ can be figured out (fig. 2) as consisting of an initial portion $CA_i$ and $S_i$ in contact with feeding conduit $M_i$ and, at a radial distance rSi from X-X, of a portion (at 180°) $C'_i$ and $S'_i$ having structural characteristics (i.e. area $A'_i$ of $S'_i$ radial length $l'_i$ of $C'_i$, distance $rS'_i$ from axis X-X) different from those of the corresponding portions $A_i$ of $S_i$, $l_i$ of $C_i$, and $rS_i$ associated to $M_i$. The variation of section from $A_i$ to $A'_i$ in the passage from $S_i$ to $S'_i$ the radial variation from $l_i$ at $C_i$ to $l'_i$ at $C'_i$ as well as the radius variation from $rS_i$ to $rS'_i$ are calculated and designed so as to obtain the same pressure drop (charge loss) in the runs of the molte resin from the locus of the circumferential distribution points to the outer surface GM of male body 6.

In fig. 3 the references indicate respectively:

- X the central trace of axis X-X of the whole head TC ;
- GM and $G_i$ the "directive" outer respectively inner curves of the male and of the plate $P_i$ defining the passage or air gap TR;
- Lli the circumferential locus of the points corresponding to the radial extensions li of channels $C_i$;
- $LA_i$ the locus of the points of the ends $E_i$ (fig. 2) of areas $A_i$.

6.

The annular zone between $G_i$ and $LP_i$ gives therefore the variation of the radial lengths of $C_i$, $G_i$ being a circumference with its center on X and Lli being a circle with its center X'and an eccetricity X-X' while the annular zone between $Ll_i$ and $LA_i$ gives the variation of areas $A_i$, $LA_i$ showing an off-set X-X" over gap TR and an eccentricity X'-X" over $Ll_i$.

The variable distances between $G_i$ and $Ll_i$ correspond to the variations of $l_i$; the distances between $LA_i$ and $Ll_i$ show the variation of the cross-sectional area of $S_i$.

it should be evident that various modifications can be made to the described embodiments without departing from the scope of the present invention.

1

CLAIMS

1. Head for the coe-extrusion of N thermoplastic resins in the form of N
   superposed tubes, said head consisting of a male inner body whose
   cylindrical surface is at a short distance from a concentric inner
   cylindrical surface with which it creates the narrow annular space or
   air gap where the primary composite tube is formed, characterized in
   that said inner air gap forming surface is made of a plurality of N+1
   plates which are modular and fit with their form; and that each plate
   shows a longitudinal conduit for feeding one of the N thermoplastic resins
   to be extruded, at least a semi-collector acting as distributor of the
   resin coming from said conduit, at least a semi-channel which extends
   radially from said collector to the inner generatrix formed by the
   cylindrical plate assembly, a projection and a recess.

2. Head according to claim 1, characterized in that the plates included
   between the first and the last plate i.e. plates from 2 to N, have a
   second semi-collector distributor and a second radial semi-channel, one
   of the two semi-collectors and semi-channels being on the upper transversal
   face and the other one being on the lower transversal face of each
   intermediate plate.

3. Head according to claims 1 and 2, characterized in that the semi-distributor
   respectively the semi-channel on one face, f.i. the lower face of a plate
   forms with the semi-collector respectively the semi-channel on the other
   face f.i. the upper face of the successive plate a collector respectively
   a channel, each of which extends on the whole inner circumference of the

*2*

plate, the initial cross-section area  of the distributor at the bottom of the feeding conduit as well as the width and the radial extension of the channel starting from said initial collector crosssection varying along the whole circumference , so as to have on a plate pressure gradients of the material under extrusion substantially equal along the locuses of the centers of all transversal sections of the distributor and of the channel terminals facing the male body.

4. Head according to claim 3, characterized in that the circumference of said locuses on one couple of plates is eccentric (off-set) over the male longitudinal axis.

5. Head according to the preceding claims, characterized in that the circumference of a couple of plates is in off-set over the circumference of all the other couples of plates.

6. Head substantially according to what described and shown.

FIG.1

FIG.2

FIG.3